# EUROPÄISCHE PATENTSCHRIFT

(11) **EP 1 112 958 B1**
(45) Veröffentlichungstag und Bekanntmachung des Hinweises auf die Patenterteilung: **02.04.2003**
(21) Anmeldenummer: 00124511.7
(22) Anmeldetag: 09.11.2000
(51) Int. Cl.: C01B 33/107, B01D 53/68

(54) **Verfahren zur Abscheidung von Chlorsilanen aus Gasströmen**
Process for separating chlorosilanes from gas streams
Procédé pour l'élimination de Chlorosilanes dans des courants gazeux

(30) Priorität: 28.12.1999 DE 19963433
(43) Veröffentlichungstag der Anmeldung: 04.07.2001
(73) Patentinhaber: Degussa AG, 40474 Düsseldorf (DE)
(72) Erfinder: Seiler, Harald, 45768 Marl (DE); Bollenrath, Franz-Michael, 45772 Marl (DE); Kuzma, Mieczyslaw, 79618 Rheinfelden (DE); Rauleder, Hartwig, 79618 Rheinfelden (DE); Koopmann, Christoph, 45136 Essen (DE)

(56) Entgegenhaltungen:
- EP-A- 0 216 292
- EP-A- 0 532 857
- US-A- 4 454 104
- US-A- 5 066 472
- US-A- 5 182 095
- US-A- 5 320 817

## Beschreibung

Die Erfindung betrifft ein Verfahren zur Abscheidung von Chlorsilanen aus Gasströmen, bei dem man die Gasströme in einer ersten Stufe mit Wasserdampf und in einer zweiten Stufe mit Wasser in Berührung bringt.

### 1. Stand der Technik

Bei der Direktsynthese von Chlorsilanen durch Reaktion von Silicium mit Chlorwasserstoff entstehen Chlorsilane und Wasserstoff. Durch Abkühlen der Reaktionsgase erhält man als Kondensat ein flüssiges Chlorsilangemisch. Selbst bei den tiefen, weit unter 0°C liegenden Temperaturen in der Kondensationsstufe haben die bei Raumtemperatur flüssigen Chlorsilane, d.h. Trichlorsilan (Silicochloroform) und Tetrachlorsilan (Siliciumtetrachlorid), noch einen erheblichen Dampfdruck, so daß nicht geringe Mengen im wasserstoffreichen Abgas verbleiben. Auch die bei Raumtemperatur gasförmigen Chlorsilane, d.h. Dichlorsilan und gegebenenfalls Monochlorsilan, die bei der Direktsynthese in geringen Mengen anfallen, sind im Abgas vertreten. Die Chlorsilane müssen aus dem wasserstoffreichen Abgas abgeschieden werden, bevor dieses mit oder ohne Energiegewinnung verbrannt oder anderweitig genutzt wird.

In EP 0 089 783 A2 ist ein Verfahren zur Behandlung von flüssigen, Chlorsilane enthaltenden Abfall- oder Nebenprodukten der Herstellung von Siliconen durch Hydrolyse von Organochlorsilanen in einem wäßrigen Medium beschrieben. Das kennzeichnende Merkmal des Verfahrens ist eine durchschnittliche SiCl-Funktionalität der Abfall- oder Nebenprodukte von mindestens 2,8, wobei das Hydrolysat in Form eines granulierten Gels gewonnen werden soll. Es hat sich jedoch gezeigt, daß durch dieses oder andere Gaswaschverfahren das Abgasproblem zu einem Abwasserproblem wird, denn im Waschwasser verbleiben äußerst schwierig zu filtrierende gelartige Oligomere.

In EP 0 532 857 A1 wird ein Verfahren zur Aufarbeitung von Rückständen einer Chlorsilandestillation durch Hydrolyse mit Wasserdampf beschrieben, welches in seiner kontinuierlichen Ausführungsform bei einer Anfangstemperatur von höchstens 160°C und einer Endtemperatur von mindestens 170°C durchgeführt wird.

### 2. Aufgabe der Erfindung

Es besteht Bedarf an einem kontinuierlichen Verfahren, mit dem man Chlorsilane aus Gasströmen durch Hydrolyse einfach und zuverlässig entfernen kann, wobei das Hydrolyseprodukt in einer Form gewonnen wird, in der es ohne weiteres entsorgt werden kann, und Ablagerungen und Verstopfungen in der Apparatur weitgehend vermieden werden, so daß lange Betriebszeiten möglich sind. Weitere Aufgaben der Erfindung werden aus der folgenden Beschreibung offenbar werden.

### 3. Kurzbeschreibung der Erfindung

Es wurde gefunden, daß sich Chlorsilane aus Gasströmen kontinuierlich wirkungsvoll entfernen lassen, wenn man die Gasströme in einer ersten Stufe in der Gasphase mit Wasserdampf und in einer zweiten Stufe mit einer flüssigen, wäßrigen Phase behandelt.

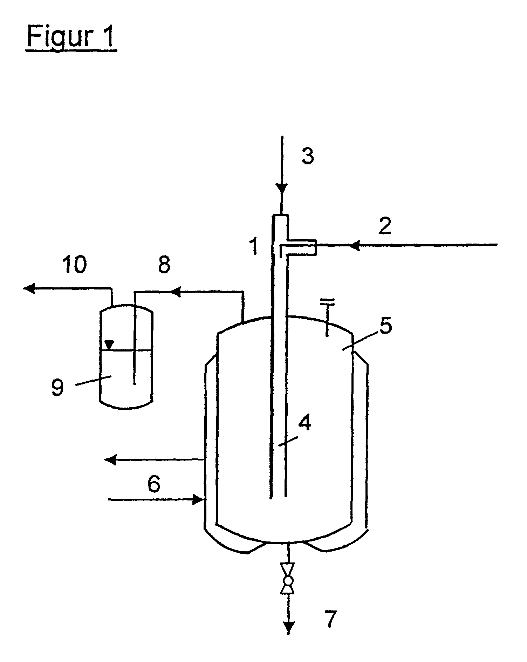

Die beigefügten Figuren 1 bis 3 stellen Schemata von Anlagen zur Durchführung des erfindungsgemäßen Verfahrens dar.

Bei dem erfindungsgemäßen Verfahren fallen die Chlorsilane nach einer Behandlung der Gasströme mit Wasserdampf in der Gasphase bei der nachfolgenden Behandlung mit einer flüssigen, wässerigen Phase in dieser Phase quantitativ in Form von gut abtrennbaren festen Hydrolyseprodukten an. Es wird angenommen, daß in der Gasphase, also in der ersten Stufe des Verfahrens, eine Hydrolyse von Si-Cl-Bindungen unter Bildung von zunächst wohl noch gasförmigen Stoffen einsetzt, die in der Folge als **primäre Hydrolyseprodukte** bezeichnet werden. Für die Annahme, daß unter den Verfahrensbedingungen eine solche Hydrolyse stattfindet, spricht die allgemein bekannte Tatsache, daß Chlorsilane durch Luftfeuchtigkeit zu SiO₂ und HCl zersetzt werden. Für die Annahme, daß die primären Hydrolyseprodukte gasförmig sind, spricht der Umstand, daß es nicht gelingt, sie auf trockenem Wege, z.B. in Zyklonen, abzuscheiden. Das sogenannte Precoating-Verfahren, bei dem man durch Einsatz von Hilfsstoffen, wie Kalkstein, Kieselgur oder Aktivkohle, vor dem eigentlichen Filter eine zusätzliche Schicht aufbaut, läßt sich ebenfalls nicht mit Erfolg für die Abscheidung der primären Hydrolyseprodukte aus dem gasförmigen Behandlungsgemisch anwenden.

Bei der Behandlung des Gasstromes mit der flüssigen, wäßrigen Phase in der zweiten Stufe des Verfahrens wirken die in der Gasphase erzeugten primären Hydrolyseprodukte möglicherweise als Kondensationskeime. Es entsteht ein heterogenes Kondensat, bestehend aus festen Hydrolyseprodukten der Chlorsilane und aus dem durch Kondensation des Wasserdampfes entstandenen und/oder anderweitig zugeführten Wasser, das als flüssige, wäßrige Phase Chlorwasserstoff sowie auch gelöste monomere, oligomere oder polymere Hydrolyseprodukte (vermutlich monomere, oligomere oder polymere Kieselsäuren) enthält. Dabei überwiegen die festen Hydrolyseprodukte. Diese festen oder gelösten Hydrolyseprodukte werden in der Folge als **sekundäre Hydrolyseprodukte** bezeichnet.

### 4. Ausführliche Beschreibung der Erfindung

Das Verfahren nach der Erfindung eignet sich besonders für die Entfernung von Chlorsilanen aus den Gasströmen, die bei dem Direktverfahren zur Herstellung von Chlorsilanen aus Silicium (Ferrosilicium) und Chlorwasserstoff nach der Tieftemperaturkondensation der Chlorsilane anfallen. Sie enthalten in der Regel 3 bis 60 Gew.-%, vorzugsweise 5 bis 15 Gew.-% Chlorsilane, die überwiegend aus Trichlorsilan und in geringerem Umfang aus Tetrachlorsilan und Dichlorsilan sowie gegebenenfalls Spuren von Monochlorsilan bestehen. Ein erheblicher - und wenn man in mol rechnet: der weit überwiegende - Anteil der Gasströme besteht aus Wasserstoff mit untergeordneten, wenn auch erheblichen Anteilen (im allgemeinen bis zu 40 Gew.-%, insbesondere 0,5 bis 10 Gew.-%, bezogen auf den Gasstrom) an Chlorwasserstoff sowie an anderen Bestandteilen, z.B. Schwefelwasserstoff. Die Gasströme fallen nach der Tieftemperaturkondensation in der Regel mit einer Temperatur von -50 bis -80°C an, können aber vor Beginn der Behandlung nach der Erfindung auf eine Temperatur vorerhitzt werden, die bis zu 200°C oder mehr betragen kann.

### 4.1 Erste Ausführungsform

Bei einer vorteilhaften ersten Ausführungsform des Verfahrens nach der Erfindung behandelt man den Gasstrom mit den darin enthaltenen Chlorsilanen zunächst bei einer Temperatur von mindestens 125°C, vorteilhaft von 130 bis 250°C, mit eigens zugeführtem Wasserdampf. Hierin unterscheidet sich diese Ausführungsform von der später beschriebenen zweiten Variante. Zweckmäßig vermischt man den Gasstrom mit überhitztem Wasserdampf, wobei dessen Menge und Temperatur so aufeinander abgestimmt sein müssen, daß der gemischte Gas-Wasserdampf-Strom die genannte Mindesttemperatur aufweist. Bei einer gegebenen Dampftemperatur kann die Dampfmenge geringer gehalten werden, wenn der Gasstrom indirekt auf eine Temperatur bis zu 200°C vorerhitzt wird, z.B. auf 40 bis 200°C.

Der Wasserdampf dient aber nicht nur als Wärmeträger, sondern bewirkt auch eine Hydrolyse der Chlorsilane. Dabei entsteht aus den Chloratomen Chlorwasserstoff. Die Wasserstoffatome der Chlorsilane verbleiben am Siliciumatom. Wie bereits erwähnt, ergeben die Chlorsilane bei der Behandlung mit Wasserdampf in der ersten Stufe ein primäres, wohl gasförmiges Hydrolyseprodukt. Für die Hydrolyse der Chlorsilane bedarf es einer Mindestmenge Wasserdampf, nämlich eines Mols je Äquivalent Chloratome. Ein Überschuß an Wasserdampf von der 1,2-fachen bis zur 300-fachen, insbesondere von der 8fachen bis zur 250-fachen stöchiometrischen Menge ist im Interesse einer raschen und vollständigen Hydrolyse sowie Abscheidung der Silicium-haltigen Hydrolyseprodukte empfehlenswert. Derartige Mengen werden auch deshalb bevorzugt, weil sie bei der nachfolgenden Kondensation genügende Mengen einer flüssigen, wäßrigen Phase bilden, mit der der Gasstrom in der zweiten Stufe weiter behandelt wird. Dabei oligomerisieren oder polymerisieren die primären Hydrolyseprodukte weiter zu gut abtrennbaren sekundären Hydrolyseprodukten. Wenn man Wasserdampf von 140 bis 260°C, entsprechend etwa 4 bis 50 bar, in einer 5- bis 500-fachen Gewichtsmenge, vorzugsweise einer 10- bis 60-fachen Gewichtsmenge, bezogen auf die Chlorsilane, anwendet, erzielt man in aller Regel sowohl eine für die Einstellung einer Temperatur von >125°C genügende Heizleistung, selbst bei nicht vorgeheizten Gasströmen, als auch eine vollständige Umwandlung der Chlorsilane in leicht abtrennbare sekundäre Hydrolyseprodukte, und zwar in Form eines heterogenen Kondensats mit Wassermengen, die zur Abtrennung der sekundären Hydrolyseprodukte noch wirtschaftlich verdampft werden können.

Die Behandlungszeiten für die Behandlung mit Wasserdampf in der ersten Stufe können sehr kurz sein und weniger als 1 sec, beispielsweise 0,0005 bis 1,5 sec und vorzugsweise 0,001 bis 1,0 sec betragen. Den kurzen Behandlungszeiten entsprechen hohe Strömungsgeschwindigkeiten, beispielsweise von 5 bis 30 m/sec. Die Behandlungszeiten für die Behandlung mit der wäßrigen Phase in der zweiten Stufe sind erheblich länger. Im allgemeinen nimmt die Behandlung in den beiden Stufen zusammen zwischen 3 und 300 sec in Anspruch. Die Strömungsgeschwindigkeiten in der zweiten Stufe sind erheblich geringer als in der ersten Stufe und betragen beispielsweise nur das 0,001- bis 0,1-fache, vorzugsweise das 0,002- bis 0,01-fache der Strömungsgeschwindigkeit bei der Behandlung des Gasstromes mit Wasserdampf in der Gasphase. Je nach dem Volumen des in der Folge beschriebenen Kühlbehälters, in dem die zweite Stufe des Verfahrens abläuft, wird die Verweilzeit während dieser Stufe entsprechend verlängert.

Bei der ersten Ausführungsform des erfindungsgemäßen Verfahrens findet die Behandlung des Chlorsilane enthaltenden Gasstromes mit Wasserdampf in der ersten Stufe vorteilhaft in einem Rohrreaktor statt. Der Gasstrom wird zweckmäßig in das Innere eines Wasserdampfstromes in Strömungsrichtung eingeleitet, wodurch der Bildung von festsitzenden Ablagerungen an der Rohrwand entgegengewirkt wird.

In der zweiten Stufe des Verfahrens tritt der Gasstrom aus der Wasserdampf-Behandlungszone mit annähernd der Eintrittstemperatur, die sich beim Mischen des Chlorsilane enthaltenden Gasstromes mit Wasserdampf einstellt, in einen Kühlbehälter aus und wird dort auf eine Temperatur unterhalb des Taupunkts gekühlt. Dadurch kondensiert der Wasserdampf, und es scheidet sich ein heterogenes Kondensat ab, bestehend aus einer flüssigen wäßrigen Phase und den erwähnten festen oder gelösten sekundären Hydrolyseprodukten. Die flüssige wäßrige Phase ist wegen des im Gasstrom enthaltenen und durch Hydrolyse der Chlorsilane entstehenden Chlorwasserstoffs stark sauer. Der verbliebene Gasstrom steht mit der entstehenden flüssigen wäßrigen Phase in Kontakt und wird dadurch mit ihr behandelt.

Im Kühlbehälter wird dem Gasstrom und dem heterogenen Kondensat Wärme durch ein Kühlmittel entzogen, das durch einen Kühlmantel, durch außen- oder innenliegende Kühlschlangen oder ähnliche Vorrichtungen strömt. Das Kühlmittel ist zweckmäßig Wasser von 10 bis 90°C.

Ein wichtiges Merkmal des Kühlbehälters besteht darin, daß er senkrechte oder annähernd senkrechte Wände aufweist. Damit sind Wände gemeint, die mit der Vertikalen Winkel von -30° bis +30°, vorteilhaft von -15° bis +15° und insbesondere von etwa 0° bilden. Derartige senkrechte oder annähernd senkrechte Wände erleichtern das erwünschte Abgleiten des heterogenen Kondensats von den Wänden zum Boden des Kühlbehälters.

Bei einer vorteilhaften Ausgestaltung der ersten Ausführungsform des erfindungsgemäßen Verfahrens wird das Gemisch aus Chlorsilane enthaltendem Gasstrom und Wasserdampf mit einer Temperatur >125°C von oben durch ein senkrecht stehendes Reaktionsrohr geleitet, das zentral von oben bis in das untere Drittel eines stehenden zylindrischen Kühlbehälters ragt, dessen Mantel von Kühlwasser durchströmt wird. Der Kühlbehälter kann in zwei Kühlzonen unterteilt sein, wobei in der unteren, wärmeren Kühlzone der größere Teil und in der oberen, kühleren Kühlzone der kleinere Teil des Wasserdampfes abgeschieden wird. Durch diese Unterteilung kommt man mit weniger Kühlwasser aus, was die spätere Abtrennung des sekundären Hydrolyseprodukts von der wäßrigen Phase des heterogenen Kondensats erleichtert. Statt zentral von oben kann der Gasstrom nach der Wasserdampfbehandlung in einem vollständig außerhalb des Kühlbehälters liegen Rohrreaktor tangential in den Kühlbehälter eingeleitet werden, der dann nur eine Kühlzone hat.

In dem Kühlbehälter kondensiert der Wasserdampf, wie erwähnt, möglicherweise an den primären Hydrolyseprodukten als Kondensationskeimen, unter Bildung von Tröpfchen, die ohne weitere Maßnahmen in die kühleren Bereiche der Kühlzone transportiert werden und sich als Film an den gekühlten Flächen niederschlagen. Treibende Kraft für den Transport ist eine durch Volumenverminderung infolge Kondensation des Wasserdampfes verursachte Strömung (Stefan-Strömung).

Wenn die Innenwände des Kühlbehälters sowie die Oberflächen aller innenliegenden Teile, wie Rohrschlangen, glatt sind, also keine makroskopischen Unebenheiten, Risse, Riefen, Nasen oder andere Vorsprünge aufweisen, gleitet das heterogene Kondensat mitsamt dem sich bildenden sekundären Hydrolyseprodukt besonders leicht von den vertikalen oder annähernd vertikalen Flächen ab und sammelt sich am Boden des Behälters in Form einer wäßrigen Phase, auf der sehr wasserreiches, feinteiliges sekundäres Hydrolyseprodukt aufschwimmt. Glatte Innenwände bzw. Oberflächen sind um so zweckmäßiger, je mehr die Neigung der Innenwände bzw. Oberflächen zur Vertikalen sich von 0° entfernt. Auf die Art des Materials für den Kühlbehälter usw. kommt es dabei weniger an als auf dessen Oberflächenbeschaffenheit. Allerdings sind hydrophile Materialien, wie Glas, Emaille und glattpolierter salzsäurebeständiger Stahl, insoweit günstiger als hydrophobe Materialien, zu denen die meisten Polymeren, wie z.B. Polytetrafluorethylen, zählen. Polymere weisen zudem einen schlechteren Wärmeübergang auf.

Das heterogene Kondensat am Boden des Kühlbehälters besteht aus Wasser, auf dem sehr wasserreiches, festes sekundäres Hydrolyseprodukt der Chlorsilane aufschwimmt. Im allgemeinen besteht das feste Hydrolyseprodukt zu 95,0 bis 99,5 Gew.-% aus eingeschlossener wäßriger Phase. Der enthaltene Feststoffanteil ist sehr feinteilig bzw. gelartig und ebenso wie bei den erwähnten Gaswaschverfahren des Standes der Technik nur schwierig vom Wasser abzutrennen. Da die Wassermenge jedoch vergleichsweise klein ist, kann es in wirtschaftlicher Weise durch Verdampfen entfernt werden. Als Rückstand verbleibt ein annähernd wasserfreies, feinteiliges Siliciumdioxid geringer Dichte als Endprodukt, das mit geringen Kosten entsorgt werden kann. In der wärigen Phase ist Chlorwasserstoff gelöst, der zum Teil in dem Chlorsilane enthaltenden Gasstrom vorhanden war und zum Teil durch Hydrolyse der Chlorsilane entstanden ist. Die wäßrige Phase enthält weiterhin wie erwähnt, gelöste Hydrolyseprodukte, wohl Kieselsäureoligomere oder -polymere.

Die **Figur 1** gibt das Schema einer Anlage zur Durchführung des erfindungsgemäßen Verfahrens in seiner ersten Ausführungsform wieder. An der Mischstelle **1** werden der Chlorsilane enthaltende Gasstrom **2** sowie Wasserdampf **3** in den Rohrreaktor **4** eingeführt. In diesem findet die Behandlung des Gasstromes mit Wasserdampf unter Bildung von primären Hydrolyseprodukten statt. Der Rohrreaktor **4** taucht in den Kühlbehälter **5** ein, dessen Kühlmantel von Kühlmittel **6** durchströmt wird. Beim Eintritt des Gasstromes in den Kühlbehälter wird die Strömungsgeschwindigkeit stark vermindert. An den Innenwänden des Kühlbehälters kondensiert der Wasserdampf, und das Kondensat fließt zusammen mit sekundären Hydrolyseprodukten in Form eines Films zum Boden des Kühlbehälters, aus dem es als heterogenes Kondensat **7** kontinuierlich oder von Zeit zu Zeit abgezogen wird. Das Restgas **8** wird durch den Wäscher **9** geleitet, der z.B. mit Natronlauge zur Entfernung von Chlorwasserstoff und zur Prüfung auf einen Gehalt an siliciumhaltigen Verbindungen beschickt sein kann, und verläßt das System als Abgas **10**. Das Abgas ist in der Regel frei von Chlorwasserstoff und von Siliciumverbindungen und kann verbrannt oder anderweitig genutzt werden. Das heterogene Kondensat **7** kann z.B. in einem Schaufeltrockner (in der Figur nicht dargestellt) bei 100 bis 160°C an der Luft getrocknet und der Rückstand entsorgt werden.

### 4.2 Zweite Ausführungsform

Bei einer zweiten Ausführungsform des Verfahrens nach der Erfindung verzichtet man auf die Mitverwendung von Wasserdampf und setzt an Stelle des nun nicht mehr zur Verfügung stehenden Kondensats eine andere wäßrige Flüssigkeit als flüssige, wäßrige Phase zur Behandlung des Gasstromes ein. Dabei hat der gegebenenfalls vorerhitzte Gasstrom im allgemeinen eine Temperatur bis zu 200°C, beispielsweise von 5 bis 200°C, vorteilhaft von 30 bis 150°C, und die Temperatur der anderen wäßrigen Flüssigkeit beträgt in der Regel 10 bis 90°C, insbesondere 20 bis 50°C. Der Wasserdampf, der je nach der Temperatur dieser anderen wäßrigen Flüssigkeit in der Gasphase über der anderen wäßrigen Flüssigkeit mit einem Partialdruck von 12 bis 700 mbar vorliegt, dient als Wasserdampf zur erfindungsgemäßen Behandlung des Gasstromes in der ersten Stufe. Daran schließt sich die zweite Stufe an, in der der Gasstrom mit der anderen wäßrigen Flüssigkeit behandelt wird.

Die andere wäßrige Flüssigkeit kann Wasser sein, z.B. Leitungswasser, Dampfkondensat oder entsalztes Wasser. Alternativ kann man z.B. eine wäßrige basische Flüssigkeit einsetzen, wie Kalkmilch, Natron- oder Ammoniaklauge. Dadurch wird zugleich der im Gasstrom enthaltene bzw. durch Hydrolyse gebildete Chlorwasserstoff neutralisiert. Zusätzlich werden etwa noch vorhandene Si-H-Bindungen zu Si-O⁻ -Bindungen und H₂ umgesetzt.

Die Behandlung in der ersten und zweiten Stufe dauert in der Regel zusammen 5 bis 120 sec, insbesondere 10 bis 40 sec.

Hinsichtlich der Apparate, der übrigen Verfahrensbedingungen sowie der Eigenschaften und der Behandlung des heterogenen Kondensats gelten die Ausführungen zur ersten Ausführungsform des Verfahrens nach der Erfindung.

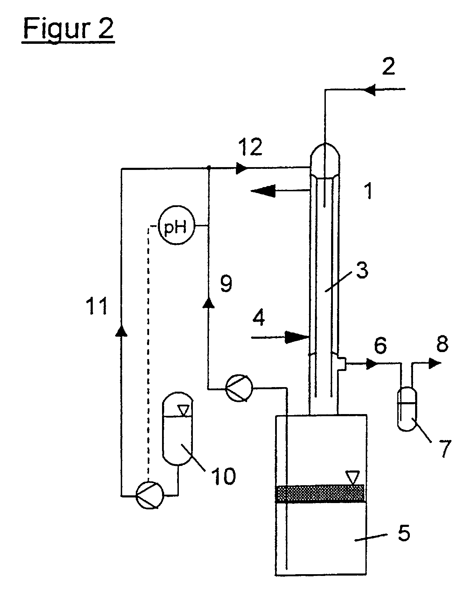

Die **Figur 2** stellt das Schema einer Anlage zur Durchführung des erfindungsgemäßen Verfahrens in seiner zweiten Ausführungsform dar. An der Mischstelle **1** wird der Chlorsilane enthaltende Gasstrom **2** in den Rohrreaktor **3** eingeführt, dessen Innenwände mit einer "anderen wäßrigen Flüssigkeit" **12**, wie Leitungs- oder entsalztes Wasser, benetzt werden. Der Rohrreaktor **3** wird durch das Kühlmittel **4** an den Wänden gekühlt. Beim Eintritt in den Rohrreaktor **3** wird die Geschwindigkeit des Gasstromes **2** stark vermindert. In dem Rohrreaktor **3** findet die Behandlung des Gasstromes **2** mit dem aus der anderen wäßrigen Flüssigkeit **12** stammenden Wasserdampf unter Bildung von Chlorwasserstoff und primären Hydrolyseprodukten statt. Die Bildung sekundärer Hydrolyseprodukte geschieht in der anderen wäßrigen Flüssigkeit **12**, die die Apparatewand benetzt, so daß eine Suspension entsteht. Diese wird im Auffangbehälter **5** von dem gereinigten Gasstrom **6** getrennt und kontinuierlich oder von Zeit zu Zeit als Hydrolysatsuspension **5** entnommen. Der gereinigte Gasstrom **6** wird durch den Wäscher **7** geleitet, der zur Prüfung auf einen Gehalt an restlichen siliciumhaltige Verbindungen z.B. mit Wasser beschickt sein kann, und verläßt das System als Abgas **8**. Zur Einsparung von anderer wäßrigen Flüssigkeit **12** kann die Suspension als Strom **9** im Kreis geführt werden, bis die Konzentration der sekundären Hydrolyseprodukte einen vorbestimmten Wert erreicht hat. Das Verfahren nach der zweiten Ausführungsform kann auf diese Weise wirkungsvoll durchgeführt werden. Zusätzlich kann der Kreislaufstrom **9** zur Neutralisation des bei der Hydrolyse entstandenen Chlorwasserstoffs mit einer wäßrigen alkalischen Flüssigkeit **11** versetzt werden, die z.B. dem Reservoir **10** entnommen werden kann. Wird auf diese Weise die andere wäßrige Flüssigkeit **12** bzw. der Kreislaufstrom **9** über eine Regelung nach dem pH-Wert alkalisch gestellt, so entstehen weitgehend lösliche Siliciumverbindungen. Dadurch wird die Neigung zur Bildung von Ablagerungen in den Apparaten **3** und **5** nochmals deutlich vermindert.

### 4.3 Dritte Ausführungsform

Die dritte Ausführungsform des Verfahrens nach der Erfindung ist eine Kombination aus den beiden ersten Varianten. Man setzt also sowohl Wasserdampf zur Behandlung des Gasstromes in der Gasphase in der ersten Stufe als auch zusätzlich eine andere, nicht ausschließlich durch Kondensation des Wasserdampfes erzeugte wäßrige Flüssigkeit zur Behandlung des Gasstromes in der zweiten Stufe ein. Der Gasstrom wird dann also sowohl mit dieser Flüssigkeit als auch mit dem durch Kühlung entstehenden Kondensat des Wasserdampfes behandelt. Bei der anderen wäßrigen Flüssigkeit kann es sich wiederum um Wasser oder um eine basische, wäßrige Flüssigkeit handeln. Alternativ verwendet man zweckmäßig das heterogene Kondensat oder dessen wäßrige Phase, das bzw. die sich am Boden des Kühlbehälters sammelt, indem man es bzw. sie im Kreis führt und nur einen Teil abzieht. Man kann z.B. die andere wäßrige Flüssigkeit oder die wäßrige Phase des heterogenen Kondensats über eine Ringleitung im obersten Teil des Kühlbehälters **5** der Figur 1 auf dessen zylindrische Innenwand leiten. Dadurch wird das Abgleiten des infolge Kühlung sich abscheidenden heterogenen Kondensats gefördert. Das Abgas aus dem Kühlgefäß ist wiederum frei von Silicium-haltigen Verbindungen und kann verbrannt oder anderweitig genutzt werden.

Die Behandlung in der ersten und zweiten Stufe dauert in der Regel zusammen 3 bis 120 sec, insbesondere 10 bis 40 sec.

Hinsichtlich der Apparate, der übrigen Verfahrensbedingungen sowie der Eigenschaften und der Behandlung des heterogenen Kondensats gelten die Ausführungen zur ersten Ausführungsform des Verfahrens nach der Erfindung.

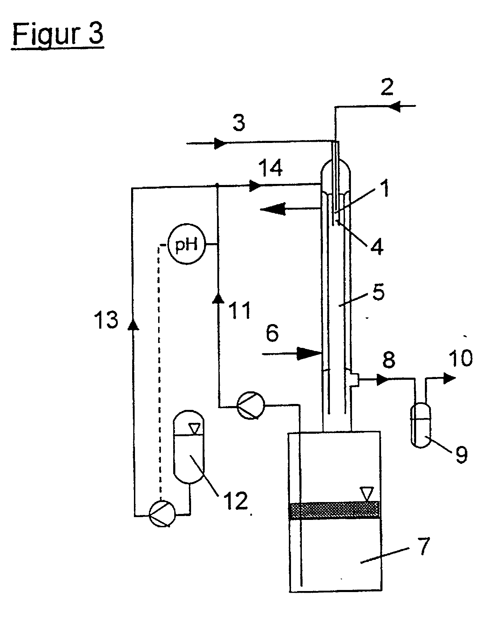

Die **Figur 3** stellt das Schema einer Anlage zur Durchführung des erfindungsgemäßen Verfahrens in seiner dritten Ausführungsform dar. An der Mischstelle **1** werden der Chlorsilane enthaltende Gasstrom **2** sowie Wasserdampf **3** in den Rohrreaktor **4** eingeführt. In diesem findet die Behandlung des Chlorsilane enthaltenden Gasstromes **2** mit Wasserdampf **3** unter Bildung von primären Hydrolysprodukten statt. Der Rohrreaktor **4** taucht in den Kühlbehälter **5** ein, dessen Innenwände mit "anderer wäßriger Flüssigkeit" **14** benetzt werden. Dieser kann mittels eines Kühlmittels **6** zusätzlich über die Wände gekühlt werden. Beim Eintritt des Gasstromes **2** und **3** in den Kühlbehälter **5** wird die Strömungsgeschwindigkeit stark vermindert. In dem Innenraum des Kühlbehälters **5** kondensiert der Wasserdampf **3**, und das Kondensat wird aufgrund einer Stefan-Strömung zusammen mit sekundären Hydrolyseprodukten an die benetzte Apparatewand transprotiert. Die entstehende Suspension aus sekundären Hydrolyseprodukten, kondensiertem Wasserdampf **3** und anderer wäßriger Flüssigkeit **14** fießt von den Wänden ab, wird im Auffangbehälter **7** gesammelt und kontinuierlich oder von Zeit zu Zeit entnommen. Das gereinigte Restgas **8** wird durch den Wäscher **9** geleitet, der zur Prüfung auf einen Gehalt an restlichen siliciumhaltigen Verbindungen z.B. mit Wasser beschickt sein kann, und verläßt das System als Abgas **10**. Bei der dritten Ausführungsform des Verfahrens nach der Erfindung mit durch andere wäßrige Flüssigkeit **14** benetzter Apparatewand ist es in der Regel nicht erforderlich, aus dem Abgas **10** Chlorwasserstoff zu entfernen. Zur Einsparung von anderer wäßriger Flüssigkeit **14** kann die Suspension als Strom **11** im Kreis geführt werden, bis die Konzentration der sekundären Hydrolyseprodukte einen vorbestimmten Wert erreicht hat. Das Verfahren nach der dritten Ausführungsform kann auf diese Weise wirkungsvoll durchgeführt werden. Zusätzlich kann der Kreislaufstrom **11** zur Neutralisation des bei der Hydrolyse entstandenen Chlorwasserstoffs mit einer wäßrigen alkalischen Flüssigkeit **13** versetzt werden, die z.B. dem Reservoir **12** entnommen werden kann. Wird auf diese Weise die andere wäßrige Flüssigkeit **14** bzw. der Kreislaufstrom **11** über eine Regelung nach dem pH-Wert alkalisch gestellt, so entstehen weitgehend lösliche Siliciumverbindungen. Dadurch wird die Neigung zur Bildung von Ablagerungen in den Apparaten **5** und **7** nochmals deutlich vermindert.

Die folgenden Beispiele sollen die Erfindung weiter erläutern, nicht aber ihren Umfang begrenzen, wie er sich aus den Patentansprüchen ergibt.

### Beispiele 1 bis 3

Es wurde eine Glasapparatur gemäß Figur 1 verwendet. Der Rohrreaktor **4** hatte eine Länge von 2,0 cm und einen Innendurchmesser von 1,0 cm. Der zylindrische Kühlbehälter **5** hatte einen Innendurchmesser von 140 cm und ein Volumen von 4,5 dm³. Die Temperatur des Kühlwassers betrug 20°C, sein Mengenstrom 12 1/min. Die übrigen Versuchsbedingungen gehen aus der Tabelle 1 hervor. Das Kondensat mit dem gelösten oder suspendierten sekundären Hydrolysat wurde eingedampft, das als Rückstand verbleibende Siliciumdioxid bei 150°C getrocknet und gewogen. Die erzielten Ergebnisse sind in der Tabelle 2 aufgeführt.

**Tabelle 1**

| Bsp. Nr. | Abgasstrom **2** | | | Wasserdampfstrom **3** | | Mengenverh.** | Rohrreaktor **4** | Kühlgefäß **5** | Mischtemp.* |
|---|---|---|---|---|---|---|---|---|---|
| | Wasserst. (g/h) | Trichlorsilan | | Temperatur (°C) | Menge (g/h) | | Verw. zeit (sec) | Verw. zeit (sec) | (°C) |
| | | (g/h) | (Gew.%) | | | | | | |
| 1 | 9,0 | 9,9 | 52,4 | 160 | 548,2 | 55,2:1 | 0,01 | 213 | 129 |
| 2 | 9,0 | 9,9 | 52,4 | 220 | 750,0 | 75,8:1 | 0,01 | 213 | 154 |
| 3 | 18,0 | 9,9 | 35,5 | 220 | 657,5 | 66,4:1 | 0,005 | 107 | 152 |

| | | | | | | | | | |
|---|---|---|---|---|---|---|---|---|---|
| * Behandlungstemperatur; gemessen 3 mm oberhalb des Eintritts des Wasserdampfstromes | | | | | | | | | |
| ** Gewichtsverhältnis Wasserdampf zu Trichlorsilan | | | | | | | | | |

**Tabelle 2**

| Beisp. Nr. | Siliciumdioxid (getrocknet) | | Abgas **8** Temperatur (°C) | Siliciumdioxid in Gaswäsche **9** (g/h) | Abgas **10** Menge (g/h) |
|---|---|---|---|---|---|
| | Menge (g/h) | Wassergehalt (Gew.-%) | | | |
| 1 | 4,1 | 0 | 30 | 0,4 | 12,4 |
| 2 | 4,1 | 0 | 32 | 0,3 | 12,8 |
| 3 | 4,3 | 0 | 30 | 0,4 | 24,7 |

### Beispiele 4 bis 6

Die Arbeitsweise entsprach derjenigen der Beispiele 1 bis 3, jedoch wurde ein Rohrreaktor mit einer Länge von 80 cm und einen Innendurchmesser von 1,0 cm sowie ein zylindrisches Kühlgefäß mit einem Innendurchmesser von 80 cm und einem Volumen von 3,0 dm³ verwendet. Die übrigen Versuchsbedingungen gehen aus der Tabelle 3 und die erzielten Ergebnisse aus der Tabelle 4 hervor.

**Tabelle 3**

| Bsp. Nr. | Abgasstrom **2** | | | Wasserdampfstrom **3** | | Mengenverh.** | Rohrreaktor **4** | Kühlgefäß **5** | Mischtemp.* |
|---|---|---|---|---|---|---|---|---|---|
| | Wasserst. (g/h) | Trichlorsilan | | Temperatur (°C) | Menge (g/h) | | Verw. zeit (sec) | Verw. zeit (sec) | (°C) |
| | | (g/h) | (Gew.%) | | | | | | |
| 4 | 18,0 | 9,9 | 35,5 | 220 | 642,0 | 64,8:1 | 0,5 | 84 | 155 |
| 5 | 13,5 | 9,9 | 42,3 | 220 | 468,9 | 47,2:1 | 0,6 | 108 | 151 |
| 6 | 9,0 | 9,9 | 52,4 | 220 | 562,9 | 56,7:1 | 0,9 | 162 | 155 |

| | | | | | | | | | |
|---|---|---|---|---|---|---|---|---|---|
| * Behandlungstemperatur; gemessen 3 mm oberhalb des Eintritts des Wasserdampfstromes | | | | | | | | | |
| ** Gewichtsverhältnis Wasserdampf zu Trichlorsilan | | | | | | | | | |

**Tabelle 4**

| Beisp. Nr. | Siliciumdioxid (getrocknet) | | Abgas **8** Temperatur (°C) | Siliciumdioxid in Gaswäsche **9** (g/h) | Abgas **10** Menge (g/h) |
|---|---|---|---|---|---|
| | Menge (g/h) | Wassergehalt (Gew.-%) | | | |
| 4 | 8,1 | 47 | 25 | 1.0 | 23,0 |
| 5 | 7,7 | 46 | 25 | 0,9 | 17,3 |
| 6 | 6,9 | 40 | 25 | 0,9 | 11,5 |

### Beispiele 7 bis 11

Es wurde eine Glasapparatur gemäß Figur 3 verwendet. Der Rohrreaktor **4** hatte eine Länge von 1,5 cm und einen Innendurchmesser von 0,6 cm. Das zylindrische Kühlgefäß hatte einen Innendurchmesser von 3,5 cm und ein Volumen von 0,67 dm³. Die Temperatur des Kühlwassers betrug 18°C, sein Mengenstrom 12 1/min. Als andere wäßrige Flüssigkeit diente entsalztes Wasser, das mit einem pH-Wert von 12,5 in einer Menge von 70 bis 100 l/h zugeführt wurde. Der pH-Wert wurde mittels 10 Gew.-% Natronlauge eingestellt. Die übrigen Versuchsbedingungen gehen aus der Tabelle 5 hervor. Die Suspension mit dem sekundären Hydrolysat wurde eingedampft, das als Rückstand verbleibende Siliciumdioxid bei 150°C getrocknet und gewogen. Die erzielten Ergebnisse sind in der Tabelle 6 aufgeführt.

**Tabelle 5**

| Bsp. Nr. | Abgasstrom **2** | | | Wässerdampfstrom **3** | | Mengenverh.** | Rohrreaktor **4** | Kühlgefäß **5** | Mischtemp.* |
|---|---|---|---|---|---|---|---|---|---|
| | Wasserst. (g/h) | Trichlorsilan | | Temperatur (°C) | Menge (g/h) | | Verw. zeit (sec) | Verw. zeit (sec) | (°C) |
| | | (g/h) | (Gew.%) | | | | | | |
| 7 | 9,0 | 9,2 | 58,5 | 220 | 468,9 | 35,7:1 | 0.001 | 20 | 165 |
| 8 | 13,5 | 9,9 | 42,3 | 220 | 138,9 | 14,1:1 | 0,005 | 19 | 138 |
| 9 | 18,0 | 10,7 | 37,3 | 220 | 468,9 | 43,7:1 | 0,001 | 11 | 155 |
| 10 | 9,0 | 12,3 | 57,8 | - | - | - | - | 20 | - |
| 11 | 18,0 | 6,3 | 25,9 | - | - | - | - | 11 | - |

| | | | | | | | | | |
|---|---|---|---|---|---|---|---|---|---|
| * Gewichtsverhältnis Wasserdampf zu Trichlorsilan | | | | | | | | | |
| ** Behandlungstemperatur; gemessen 3 mm oberhalb des Eintritts des Wasserdampfstromes | | | | | | | | | |

**Tabelle 6**

| Beisp. Nr. | Siliciumdioxid (getrocknet) | | Abgas **8** Temperatur (°C) | Siliciumdioxid in Gaswäsche **9** (g/h) | Abgas **10** Menge (g/h) |
|---|---|---|---|---|---|
| | Menge (g/h) | Wassergehalt (Gew.-%) | | | |
| 7 | 6,6 | 38 | 30 | 0,8 | 12,4 |
| 8 | 6,8 | 38 | 30 | 0,3 | 16,9 |
| 9 | 7,2 | 38 | 30 | 0,2 | 24,7 |
| 10 | 7,7 | 31 | 30 | 0,4 | 12,4 |
| 11 | 3,7 | 28 | 40 | 0,4 | 12,4 |

Die Versuche der Beispiele 1 bis 11 haben gezeigt, daß die Chlorsilane praktisch quantitativ entfernt werden. Die Apparate zeigten auch nach 4 Wochen ununterbrochenem Betrieb praktisch keinen Belag auf Rohren, Wänden und sonstigen Anlageteilen, geschweige denn Verstopfungen.

## Patentansprüche

1. Verfahren zur kontinuierlichen Entfernung von Chlorsilanen aus Gasströmen, **dadurch gekennzeichnet, daß** man die Gasströme in einer ersten Stufe in der Gasphase mit Wasserdampf und in einer zweiten Stufe mit einer flüssigen, wäßrigen Phase behandelt.

2. Verfahren nach Anspruch 1, **dadurch gekennzeichnet, daß** die Gasströme bei dem Direktverfahren zur Herstellung von Chlorsilanen aus Silicium oder Ferrosilicium und Chlorwasserstoff angefallen sind und 3 bis 60 Gew.-% Chlorsilane enthalten.

3. Verfahren nach Anspruch 1 oder 2, **dadurch gekennzeichnet, daß** man in der ersten Stufe den Gasstrom mit den darin enthaltenen Chlorsilanen bei einer Temperatur von mindestens 125°C mit eigens zugeführtem Wasserdampf behandelt und in der zweiten Stufe als flüssige Phase das heterogen Kondensat aus Wasser und sekundären Hydrolyseprodukten, das sich bei der Kondensation des Wasserdampfes nach Abkühlung auf eine Temperatur unterhalb des Taupunktes bildet, oder die wäßrige Phase dieses heterogenen Kondensats verwendet.

4. Verfahren nach Anspruch 3, **dadurch gekennzeichnet daß** die Behandlungstemperatur in der ersten Stufe 125 bis 250°C beträgt.

5. Verfahren nach Anspruch 3 oder 4, **dadurch gekennzeichnet, daß** man in der ersten Stufe den Gasstrom in das Innere eines Wasserdampfstromes in Strömungsrichtung einleitet.

6. Verfahren nach einem der Ansprüche 3 bis 5, **dadurch gekennzeichnet, daß** das Gewichtsverhältnis von Wasserdampf zu Chlorsilanen 5:1 bis 100:1 beträgt.

7. Verfahren nach einem der Ansprüche 3 bis 6, **dadurch gekennzeichnet, daß** in der ersten Stufe das Gemisch aus Chlorsilane enthaltendem Gasstrom und Wasserdampf durch ein Reaktionsrohr geleitet wird, das zentral von oben bis in das untere Drittel eines stehenden zylindrischen Kühlbehälters ragt, dessen Mantel von Kühlwasser durchströmt wird und in dem die zweite Stufe des Verfahrens stattfindet.

8. Verfahren nach einem der Ansprüche 3 bis 6, **dadurch gekennzeichnet, daß** der Siliciumdioxidteilchen enthaltende Gasstrom nach der Hydrolyse in einem Rohrreaktor, der vollständig außerhalb des Kühlbehälters liegt, tangential in den Kühlbehälter eingeleitet wird.

9. Verfahren nach Anspruch 7 oder 8, **dadurch gekennzeichnet, daß** der Kühlbehälter in zwei Kühlzonen unterteilt ist.

10. Verfahren nach einem der Ansprüche 1 bis 9, **dadurch gekennzeichnet, daß** die Behandlung in der ersten und *zwei*ten Stufe zusammen 3 bis 300 sec dauert.

11. Verfahren nach Anspruch 1 oder 2, **dadurch gekennzeichnet, daß** man in der ersten Stufe auf die Mitverwendung von eigens zugeführtem Wasserdampf verzichtet und an Stelle des heterogenen Kondensats eine andere wäßrige Flüssigkeit einsetzt, um den Gasstrom in der zweiten Stufe mit einer flüssigen, wäßrigen Phase zu behandeln.

12. Verfahren nach Anspruch 11, **dadurch gekennzeichnet, daß** die Temperatur des Gasstromes bis zu 200°C beträgt.

13. Verfahren nach Anspruch 11 oder 12, **dadurch gekennzeichnet, daß** die Temperatur der anderen wäßrigen Flüssigkeit 10 bis 90°C beträgt.

14. Verfahren nach einem der Ansprüche 11 bis 13, **dadurch gekennzeichnet, daß** die Behandlung in der ersten und zweiten Stufe zusammen 5 bis 120 sec dauert.

15. Verfahren nach einem der Ansprüche 11 bis 14, **dadurch gekennzeichnet, daß** die andere wäßrige Flüssigkeit Wasser oder eine basische wäßrige Flüssigkeit ist.

16. Verfahren nach einem der Ansprüche 3 bis 9, **dadurch gekennzeichnet, daß** man zusätzlich zu der aus Wasserdampf entstehenden flüssigen Phase eine andere, nicht durch Kondensation des Wasserdampfes erzeugte wäßrige Flüssigkeit zur Behandlung des Gasstromes in der zweiten Stufe einsetzt.

17. Verfahren nach Anspruch 16, **dadurch gekennzeichnet, daß** die andere wäßrige Flüssigkeit Wasser oder eine basische wäßrige Flüssigkeit ist.

18. Verfahren nach Anspruch 16, **dadurch gekennzeichnet, daß** die andere wäßrige Flüssigkeit das heterogene Kondensat oder dessen wäßrige Phase ist.

19. Verfahren nach einem der Ansprüche 16 bis 18, **dadurch gekennzeichnet, daß** die Behandlung in der ersten und zweiten Phase zusammen 3 bis 120 sec dauert.

## Claims

1. A process for the continuous removal of chlorosilanes from gas streams **characterized in that** the gas stream is treated in a first stage in the gas phase with steam and in a second stage with a liquid, aqueous phase.

2. A process according to claim 1, **characterized in that** the gas stream is formed in the direct process for the preparation of chlorosilanes from silicon or ferrosilicon and hydrogen chloride and contains 3 to 60% by weight of chlorosilanes.

3. A process according to claim 1 or 2, **characterized in that** in the first stage the gas stream with the chlorosilanes contained therein is treated at a temperature of at least 125°C with individually supplied steam and in the second stage the heterogeneous condensate of water and secondary hydrolysis products which is formed in the condensation of the steam after cooling to a temperature below the dew point, or the aqueous phase of this heterogeneous condensate, is used as the liquid phase.

4. A process according to claim 3, **characterized in that** the treatment temperature in the first stage is 125 to 250°C.

5. A process according to claim 3 or 4, **characterized in that**, in the first stage, the gas stream is led into the interior of a steam stream in the flow direction.

6. A process according to any one of claims 3 to 5, **characterized in that** the weight ratio of steam to chlorosilanes is 5:1 to 100:1.

7. A process according to any one of claims 3 to 6, **characterized in that**, in the first stage, the mixture of chlorosilane-containing gas stream and steam is passed through a reaction tube which projects centrally from above into the lower third of a vertical cylindrical cooling container through whose jacket cooling water flows and in which the second stage of the process takes place.

8. A process according to any one of claims 3 to 6, **characterized in that** the gas stream containing silica particles is passed tangentially into the cooling container after the hydrolysis in a tubular reactor which lies completely outside the cooling container.

9. A process according to claim 7 or 8, **characterized in that** the cooling container is subdivided into two cooling zones.

10. A process according to any one of claims 1 to 9, **characterized in that** the treatment in the first and second stages together lasts 3 to 300 sec.

11. A process according to claim 1 or 2, **characterized in that**, in the first stage, the additional use of individually supplied steam is dispensed with and instead of the heterogeneous condensate another aqueous liquid is employed in order to treat the gas stream in the second stage with a liquid, aqueous phase.

12. A process according to claim 11, **characterized in that** the temperature of the gas stream is up to 200°C.

13. A process according to claim 11 or 12, **characterized in that** the temperature of the other aqueous liquid is 10 to 90°C.

14. A process according to any one of claims 11 to 13, **characterized in that** the treatment in the first and second stages together lasts 5 to 120 sec.

15. A process according to any one of claims 11 to 14, **characterized in that** the other aqueous liquid is water or a basic aqueous liquid.

16. A process according to any one of claims 3 to 9, **characterized in that**, in addition to the liquid phase resulting from steam, another aqueous liquid not produced by condensation of the steam is employed for the treatment of the gas stream in the second stage.

17. A process according to claim 16, **characterized in that** the other aqueous liquid is water or a basic aqueous liquid.

18. A process according to claim 16, **characterized in that** the other aqueous liquid is the heterogeneous condensate or its aqueous phase.

19. A process according to any one of claims 16 to 18,
**characterized in that** the treatment in the first and second phases together lasts 3 to 120 sec.

## Revendications

1. Procédé pour extraire en continu des chlorosilanes dans des courants gazeux,
**caractérisé en ce que**
les courants gazeux sont traités, dans une première étape, par de la vapeur d'eau dans la phase gazeuse et, dans une seconde étape, par une phase liquide aqueuse.

2. Procédé selon la revendication 1,
**caractérisé en ce que**
les courants gazeux sont produits dans le procédé direct de fabrication de chlorosilanes à partir de silicium ou de ferrosilicium et d'acide chlorhydrique et contiennent de 3 à 60 % en poids de chlorosilanes .

3. Procédé selon l'une quelconque des revendications 1 ou 2,
**caractérisé en ce qu'**
on traite dans la première étape le courant gazeux et les chlorosilanes qu'il contient à une température d'au moins 125°C avec de la vapeur d'eau amenée spécialement et dans la seconde étape on utilise comme phase liquide celle constituée du condensat hétérogène d'eau et de produits secondaires d'hydrolyse, qui se forme par condensation de la vapeur d'eau refroidie à une température inférieure au point de rosée, ou on utilise la phase aqueuse de ce condensat hétérogène.

4. Procédé selon la revendication 3,
**caractérisé en ce que**
la température de traitement, à la première étape, est de 125 à 250°C.

5. Procédé selon l'une quelconque des revendication 3 ou 4,
**caractérisé en ce que**
dans la première étape, on introduit le courant gazeux à l'intérieur d'un courant de vapeur d'eau, dans le sens de l'écoulement.

6. Procédé selon l'une quelconque des revendications 3 à 5,
**caractérisé en ce que**
le rapport pondéral de la vapeur d'eau aux chlorosilanes est de 5 :1 à 100 :1.

7. Procédé selon l'une quelconque des revendications 3 à 6,
**caractérisé en ce que**
dans la première étape on fait passer le mélange constitué du courant gazeux contenant les chlorosilanes et de vapeur d'eau, dans un tube de réaction qui pénètre centralement par le haut jusqu'au tiers inférieur d'un récipient cylindrique de refroidissement, vertical, dont l'enveloppe est traversée par un agent de refroidissement et dans lequel s'effectue la seconde étape du procédé.

8. Procédé selon l'une quelconque des revendications 3 à 6,
**caractérisé en ce que**
le courant gazeux contenant des particules de dioxyde de silicium, après hydrolyse dans un réacteur tubulaire totalement extérieur au récipient de refroidissement, est introduit tangentiellement dans ce récipient.

9. Procédé selon l'une quelconque des revendications 7 ou 8,
**caractérisé en ce que**
le récipient de refroidissement est divisé en deux zones de refroidissement.

10. Procédé selon l'une quelconque des revendications 1 à 9,
**caractérisé en ce que**
le traitement, dans la première et la seconde étape, dure en tout de 3 à 300 secondes.

11. Procédé selon l'une quelconque des revendications 1 ou 2,
**caractérisé en ce que**
dans la première étape, on renonce à utiliser en même temps de la vapeur d'eau amenée spécialement, et au lieu du condensat hétérogène on utilise un autre liquide aqueux pour, à la seconde étape, traiter le courant gazeux par une phase liquide aqueuse.

12. Procédé selon la revendication 11,
**caractérisé en ce que**
la température du courant de gaz atteint jusqu'à 200°C.

13. Procédé selon l'une quelconque des revendications 11 ou 12,
**caractérisé en ce que**
la température de l'autre liquide aqueux est de 10 à 90°C.

14. Procédé selon l'une quelconque des revendications 11 à 13,
**caractérisé en ce que**
le traitement, dans la première et la seconde étape, dure en tout de 5 à 120 secondes.

15. Procédé selon l'une quelconque des revendications 11 à 14,
**caractérisé en ce que**
l'autre liquide aqueux est de l'eau ou un liquide à base d'eau.

16. Procédé selon l'une quelconque des revendications 3 à 9,
**caractérisé en ce qu'**
on utilise pour traiter le courant de gaz à la seconde étape, en plus de la phase aqueuse provenant de la vapeur d'eau, un autre liquide aqueux ne résultant pas de la condensation de la vapeur d'eau.

17. Procédé selon la revendication 16,
**caractérisé en ce que**
l'autre liquide aqueux est de l'eau ou un liquide à base d'eau.

18. Procédé selon la revendication 16,
**caractérisé en ce que**
l'autre liquide à base d'eau est le condensat hétérogène ou sa phase aqueuse.

19. Procédé selon l'une quelconque des revendications 16 à 18,
**caractérisé en ce que**
le traitement, dans la première et la seconde étape, dure en tout 3 à 120 secondes.
